# EUROPEAN PATENT APPLICATION

(11) **EP 0 969 397 A2**
(43) Date of publication of application: **05.01.2000**
(21) Application number: 99111948.8
(22) Date of filing: 23.06.1999
(51) Int. Cl.: G06F 17/60

(54) **Environmental load evaluation device**

(30) Priority: 29.06.1998 JP 18219098
(71) Applicant: NEC CORPORATION, Tokyo (JP)
(72) Inventor: Miyamoto, Shigeyuki, Minato-ku, Tokyo (JP)
(74) Representative: Baronetzky, Klaus, Dipl.-Ing.

(57) **Abstract**

An environment load evaluation device calculates an environment load of an object material based on the name and the weight of the object material. The environment load evaluation device includes a weighing sensor (12, 21)) for measuring the weight of the object material a material sensor (17, 22) for detecting the name of the object material. The work by the evaluator can be alleviated and reliable environment load value can be obtained.

## Description

### BACKGROUND OF THE INVENTION

### (a) Field of the Invention

The present invention relates to an environmental load evaluation device and, more particularly, an environmental evaluation device capable of facilitating evaluation of an environmental load of an object material.

### (b) Description of the Related Art

In view of increased pollution in the natural environment, environmental load evaluation devices are to be used more and more for evaluating an environment load generated during fabrication of each product. Examples of the environment loads to be evaluated include, for example, amount of carbon dioxide generated or amount of total energy consumed during fabrication of the product. Patent Publication JP-A-10-57936 describes a conventional environment load evaluation device for evaluating an environmental load along the life cycle of a product.

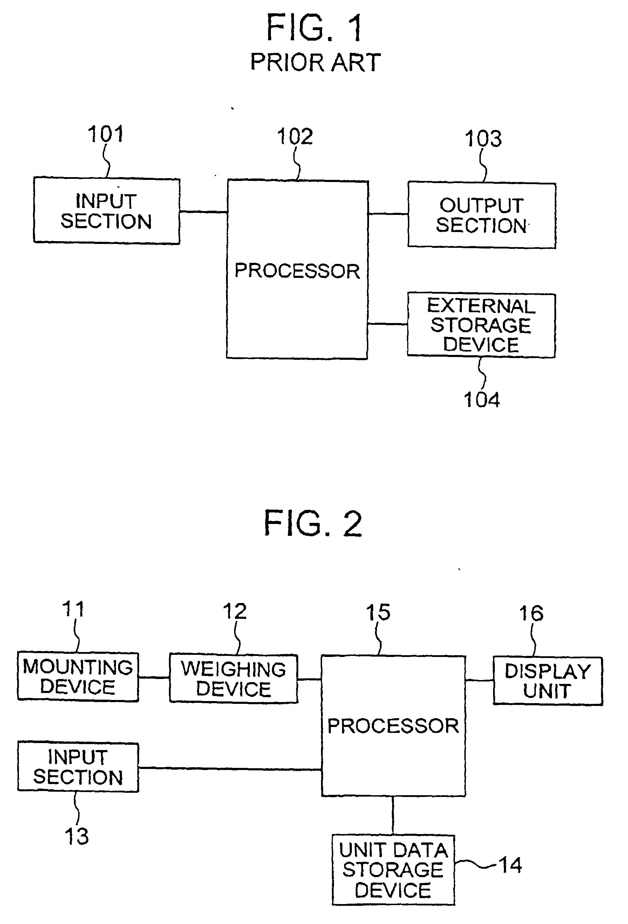

Referring to Fig. 1, the conventional environment load evaluation device described in the publication includes an input section 101 for inputting therethrough information for the name, quantity etc. of each material in a product, a processor 102 for calculating an environmental load value based on the data previously prepared for this purpose based on statistic data, and an output section 103 for outputting the results calculation by the processor 102.

In the conventional environment load evaluation device as described in the publication, there are some drawbacks. First, the input operation through the input section 101 requires precedent works, such as measuring the weight of the object material, evaluating the object material by inspection of the appearance and analysis of the physical or chemical properties to specify the name of the object material, before the input operation for the object material.

Second, the data input through the input section 101 tends to have a relatively low reliability because the input data depend on the experience or ability of the evaluators who evaluated the object material by the appearance or the physical or chemical properties thereof. This involves different results of the environment data depending on the evaluators, which is undesirable.

### SUMMARY OF THE INVENTION

It is therefore an object of the present invention to provide an environment load evaluation device which is capable of facilitating evaluation of the environment load and providing accurate and reliable results by reducing the dependence on the experience or ability of the evaluator.

The present invention provides, in a first aspect thereof, an environment load evaluation device including a mounting device which mounts thereon an object material, a weighing device which measures weight of the object material mounted on the mounting device, a storage device which stores unit environment load data for a unit weight of each of possible object materials, an input device through which a name of the object material is specified, a processor which calculates an environment load value for the object material based on the weight and the unit environment load data of the object material retrieved from the storage device based on the name specified through the input device, and an output device which outputs the environment load value calculated by the processor.

The present invention provides, in a second aspect thereof, an environment load evaluation device including a mounting device which mounts thereon an object material, a weighing device which measures weight of the object material mounted on the mounting device, a storage device which stores unit environment load data for a unit weight of each of possible object materials, a material sensor which specifies a name of the object material mounted on the mounting device, a processor which calculates an environment load value for the object material based on the weight and the unit environment load data of the object material retrieved from the storage device based on the name specified by the material sensor, and an output device which outputs the environment load value calculated by the processor.

The present invention provides, in a third aspect thereof, an environment load evaluation device including a mounting device which mounts thereon an object material, a weighing device which measures weight of the object material mounted on the mounting device, a storage device which stores unit environment load data for a unit weight of each of possible object materials, a material sensor which specifies a name of the object material mounted on the mounting device, an input device through which the name of the object material specified by the material sensor is corrected, a processor which calculates an environment load for the object material based on the weight and the unit environment load data of the object material retrieved from the storage device based on the name specified through the input device, and an output device which outputs the environment load calculated by the processor.

In accordance with the environment load evaluation devices of the present invention, at least the input of the weight of the object material can be alleviated thereby reducing the work by the input operator and the evaluator. If the name of the object material is judged by the material sensor as in the case of the second and third aspects of the present invention, an accurate and reliable environment load can be obtained without depending on the experience and ability of the evaluator.

### BRIEF DESCRIPTION OF THE DRAWINGS

Fig. 1 is a block diagram of a conventional environmental load evaluation device.
Fig. 2 is a block diagram of an environment load evaluation device according to a first embodiment of the present invention.
Fig. 3 is a block diagram of an environment load evaluation device according to a second embodiment of the present invention.
Fig. 4 is a block diagram of an environment load evaluation device according to a third embodiment of the present invention.
Fig. 5 is a schematic perspective view of an example of the environment load evaluation device of Fig. 4.

### PREFERRED EMBODIMENTS OF THE INVENTION

Now, the present invention is more specifically described with reference to accompanying drawings, wherein similar constituent elements are designated by similar reference numerals.

Referring to Fig. 2, an environment load evaluation device according to a first embodiment of the present invention includes a mounting device 11 for mounting thereon an object material for evaluation, a weighing device 12 for measuring the weight of the object material mounted on the mounting device 11, an input section 13 for inputting therethrough the name of the object material mounted on the mounting device 11 based on the results of evaluation for the object material by an evaluator, a unit data storage device 14 for storing unit data of environment load for a unit weight of each possible object material for evaluation, a processor 15 for evaluating an environmental load value for the object material mounted on the mounting device 11 based on the unit data and the weight of the object material, and a display unit 16 for displaying the result of the environment load value obtained by the processor 15.

In operation of the environment load evaluation device of Fig. 2, the evaluator first mounts the object material on the mounting device 11. Then, the weighing device 12 measures the weight of the object material. The evaluator judges the name of the object material beforehand by evaluating the object material using other devices. The evaluator inputs the name of the object material through the input section 13. The processor 15 retrieves the unit data (unit environment load) for a unit weight of the object material from the unit data storage device 14 based on the name of the object material input through the input section 13, and calculates an environmental load value of the object material by multiplying the unit data by the weight obtained from the weighing device 12. The environmental load value calculated for the object material by the processor 15 is displayed on the display unit 16.

In the first embodiment, the weighing device 12 alleviates the measurement and input for the weight of the object material by the evaluator, thereby simplifying the evaluation of the environment load.

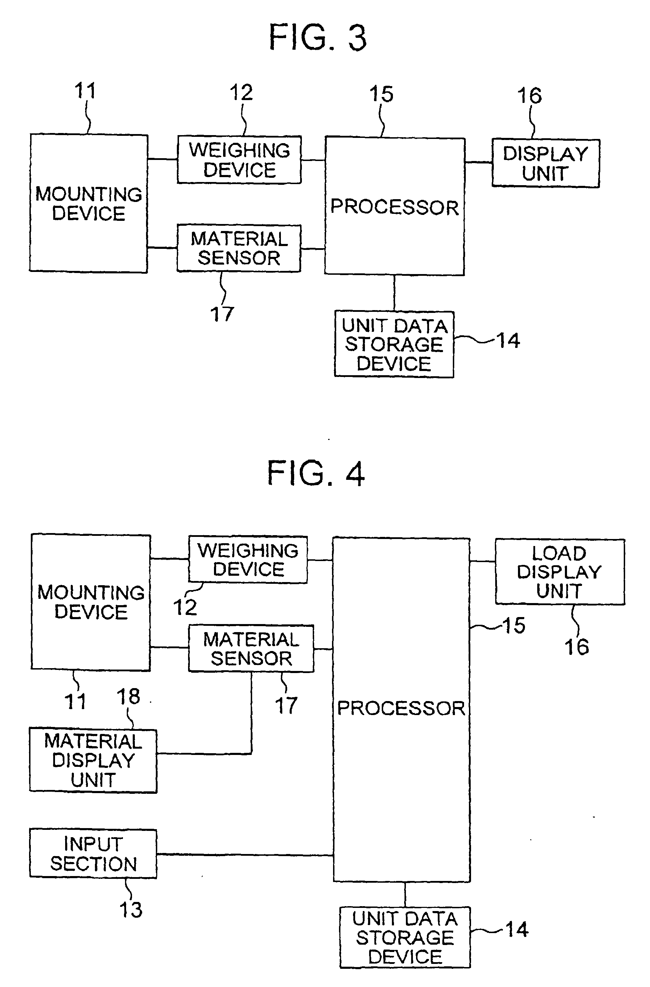

Referring to Fig. 3, an environment load evaluation device according to a second embodiment of the present invention is similar to the first embodiment except for a material judgement device or material sensor 17 provided in the present embodiment instead of the input section 13.

The material sensor 17 evaluates the physical or chemical properties of the object material to specify the name of the object material mounted on the mounting device 11. By the configuration of the present embodiment, the name of the object material need not be evaluated beforehand by the evaluator, thereby alleviating the work for evaluation of the environment load. In addition, the result of judgement for the object material does not depend on the experience and ability of the evaluator, which provides highly objective and reliable results for the environment load evaluation.

Referring to Fig. 4, an environment load evaluation device according to a third embodiment of the present invention is similar to the second embodiment except for a material display unit 18 and an input section 13 provided in addition to the devices shown in Fig. 3.

In the present embodiment, the material display unit 18 displays the name of the object material obtained by the material judgement device 17. The evaluator judges whether or not the judgement by the material sensor 17 is correct, confirms the judgement through the input section 13 if the judgement is correct, and corrects the judgement by inputting a correct name for the object material through the input section 13 if the judgement is not correct.

According to the third embodiment, the evaluator is not required to judge the name of the object material beforehand. That is, the present embodiment alleviates the work by the evaluator if the judgement by the material sensor 17 is correct. In addition, a reliable judgement can be obtained so long as the evaluator correctly judges the name of the object material by consideration of the judgement by the material sensor 18.

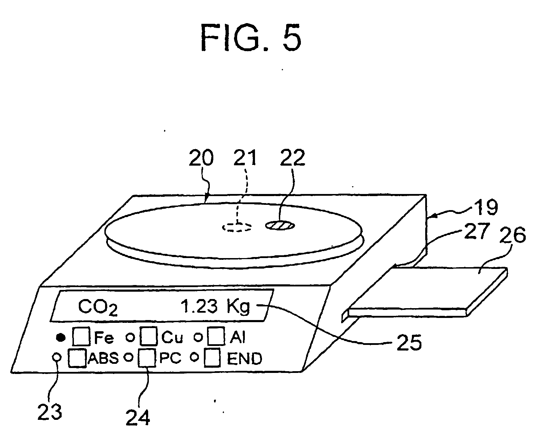

Referring to Fig. 5, an example of the environment load evaluation device according to the third embodiment is used for evaluating amount of total carbon dioxide exhausted during the process for preparing the object material. The environment load evaluation device includes a casing 19 mounting thereon a dish (or mounting device) 20 having a weighing sensor 21 and a material sensor 22, and a memory card drive having a slot 27 for receiving therein a memory card 26. The environment load evaluation device further includes a display unit 25 of a liquid crystal type for displaying the result of evaluation for the object material.

The display unit 25 displays the name and amount of the environment load, which are expressed as the weight of the carbon dioxide which is exhausted in the process for preparing the object material. The environment load evaluation device further includes, in the vicinity of the display unit 25, a plurality of light emitting diodes (LED) 23 acting as a material display unit, and a corresponding number of push buttons 24 to be depressed for confirming or correcting the name of the object material. The combinations of the button 24 and the LED 23 includes those for iron, copper, aluminum, acrylonitril-butadiene-styrene (ABS), polycarbonate (PC), and "END". END button is depressed after the evaluator considers that a correct name of the object material is obtained.

In calculation of the environment load value, the evaluator first mounts the object material on the dish 20 to measure the weight of the object material by the weighing sensor 21. The material sensor 22 also detects the name of the object material. The result of the judgement by the material sensor 22 is informed to the evaluator by light emission of a corresponding one of the LEDs 23. If the evaluator agrees to the result informed by the LED 23, the evaluator depresses the END button. On the other hand, if the evaluator judges that the material sensor is incorrect, the evaluator depresses one of the buttons 24 disposed for the correct name for the object material. The processor selects the name of the object material supplied from the material sensor 22 if END button is depressed or selects the name of the object material supplied through the input section 11 if END button is not depressed.

The memory card 26 stores unit data for each possible material, the unit data including information for the amount of carbon dioxide exhausted during preparation of the unit weight of the each material, which is obtained by experimental processes. The processor retrieves the unit data from the memory card 26 based on the name of the object material informed from the evaluator or the material sensor 22, multiplies the unit data by the weight obtained by the weighing sensor 21, thereby calculating the total amount of carbon dioxide generated during preparation of the object material mounted on the dish 20. The result of calculation is displayed on the display unit 25.

Examples of the material sensor 22 include a magnetic sensor for detecting iron or an iron alloy, a resistance meter including a DC current meter for measuring current between electrodes applied with a DC voltage and disposed in contact with the object material or an electromagnetic induction sensor for measuring eddy current in a coil disposed in the vicinity of the object material, if the object material is a metallic material. An electrostatic capacity sensor may be also used for measuring electrostatic capacity between electrodes disposed in contact with the object material if the object material is made of an insulator such as ceramics.

A radiation sensor may be also used which irradiates the object material with infrared ray or ultraviolet ray and detects the infrared ray after reflection or absorption by the object material or detects fluorescent ray during the irradiation of the ultraviolet ray. The ray sensor of an absorption type can be used for detecting a variety of ceramics, whereas a fluorescent ray sensor can be used for detecting a fluorescent material. These sensors as described above may be used as a single material sensor or may be used in combination of all or some of the sensors for improvement of accuracy and adaptation to variety of object materials.

In the above embodiments, amount of carbon dioxide is exemplarily described as an environment load value. However, a variety of environment loads can be evaluated by the environment load evaluation device of the present invention, including amount of consumed energy, mass of toxic substance, degree of souring, degree of eutrophic ability and amount of rare resources.

In a modification of the embodiments, the display unit may be of a cathode-ray tube type or a LED array type instead of the liquid crystal type. In addition, a printer may be provided as an output device in addition to the display unit for printing the results of evaluation. Further, an accumulation function may be also provided in the processor for accumulating the results of evaluation for environmental loads from a plurality of object materials.

In the example of the third embodiment, a memory card 26 is used which stores the unit data for unit weight of each object material. The memory card is suited because of its removability. A plurality memory cards are preferably used for a variety of series of object materials. Further, the data in the memory card are preferably rewritable by using a writing device for updating the current unit data with new unit data, thereby improving the accuracy of the evaluation.

It is also preferable that the materials for which the unit data are stored in the memory card be displayed on a display unit. This further, increases the number of object materials for which the environment load evaluation device can be used.

Since the above embodiments are described only for examples, the present invention is not limited to the above embodiments and various modifications or alterations can be easily made therefrom by those skilled in the art without departing from the scope of the present invention.

## Claims

1. An environment load evaluation device comprising a storage device (14, 26) which stores unit environment load data for a unit weight of each of possible object materials, a processor (15) which calculates an environment load value for an object material based on a weight and the unit environment load data retrieved from said storage device (14, 26) based on the name of the object material, and an output device (16, 25) which outputs the environment load value calculated by said processor (15), characterized by:
a weighing device (12, 21) which measures the weight of the object material.

2. The environment load evaluation device as defined in claim 1, wherein said environment load value is one of amount of carbon dioxide, amount of energy, mass of toxic substance, degree of souring, degree of eutrophic ability and amount of rare resource, which are generated during preparation of the object material.

3. The environment load evaluation device as defined in claim 1 or 2, further comprising an input device (13, 24) for inputting therethrough the name of the object material.

4. The environment load evaluation device as defined in one of claims 1 to 3, further comprising a material sensor (17, 22) for specifying the name of the object material.

5. The environment load evaluation device as defined in claim 4, further comprising a material display unit (18, 23) for displaying the name of the object material specified by said material sensor (17, 22).

6. The environment load evaluation device as defined in claim 4 or 5, wherein said material sensor (17, 22) includes at least one of magnetic sensor, resistance meter, eddy current meter, electrostatic capacity meter, infrared ray sensor and fluorescent ray sensor.
